# EUROPEAN PATENT APPLICATION

(11) **EP 4 162 800 A1**
(43) Date of publication of application: **12.04.2023**
(21) Application number: 21822203.2
(22) Date of filing: 03.06.2021
(51) Int. Cl.: A01N 43/836, A01N 25/02, A01P 21/00

(54) **METHOD FOR REDUCING OR PREVENTING EFFECT OF NON-BIOLOGICAL STRESS ON PLANT**

(30) Priority: 08.06.2020 JP 2020099654
(71) Applicant: Nippon Soda Co., Ltd., Tokyo 100-8165 (JP)
(72) Inventor: TAKAHASHI, Akihiro, Odawara-shi, Kanagawa 250-0280 (JP); SAIGA, Tomoyuki, Odawara-shi, Kanagawa 250-0280 (JP); NAKAMURA, Yuka, Odawara-shi, Kanagawa 250-0280 (JP)
(74) Representative: Mewburn Ellis LLP
(86) International application number: PCT/JP2021/021242
(87) International publication number: WO 2021/251274

(57) **Abstract**

The present invention aims to provide a method for reducing or preventing an abiotic stress on a plant.

A method for reducing or preventing an influence of an abiotic stress on a plant, comprising treating a plant exposed or not to the abiotic stress with at least one compound selected from the group consisting of the compounds represented by the following formula (I) and the like:
(wherein in formula (I),
Q denotes a group represented by formula (Q-1), formula (Q-2), or the like,
In formula (Q-1) and formula (Q-2), * denotes an attachment point,
Z denotes a C1-6 alkyl group or the like,
X¹ denotes a C1-6 alkyl group or the like,
m is a chemically acceptable number of X¹ and denotes any integer of 0 to 4,
L denotes a single bond and the like,
A¹ denotes an oxygen atom and the like, and
A² denotes an oxygen atom and the like).

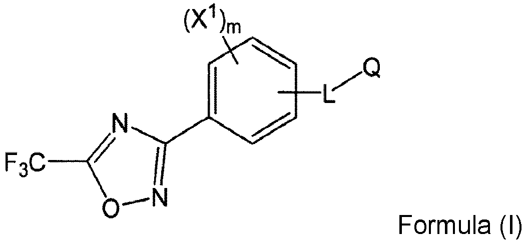

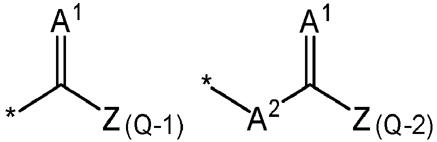

## Description

### Technical Field

The present invention relates to a method for reducing or preventing an influence of an abiotic stress using a 5-membered heterocyclyl compound. The present application claims priority to Japanese Patent Application No. 2020-099654 filed on June 8, 2020, the contents of which are incorporated herein by reference.

### Background Art

When a plant encounters an abiotic stress environment, the physiological function of the cells may gradually or rapidly decline and various disorders may develop. Some chemical substances are known to have a reducing effect on the influences of abiotic stresses such as temperature stress and drought stress by adjusting the physiological state of plants (see for example, patent document 1 and patent document 2). However, in the practice, they are not sufficient in terms of effectiveness.

Meanwhile, patent document 3 discloses the compounds of formula (A), formula (B), formula (C), formula (G), formula (H), formula (J), and the like. 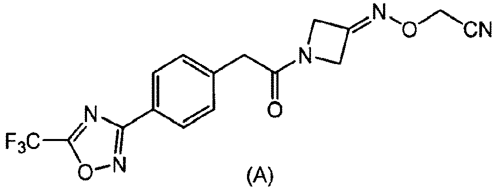 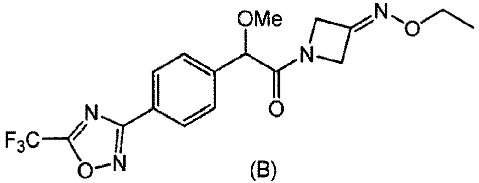 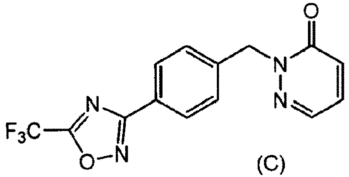 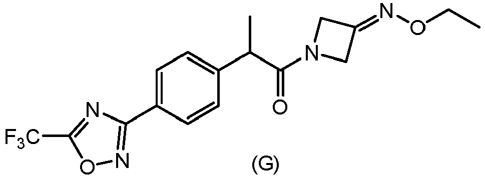 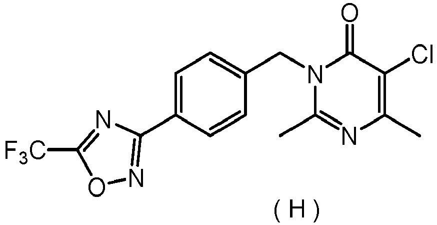 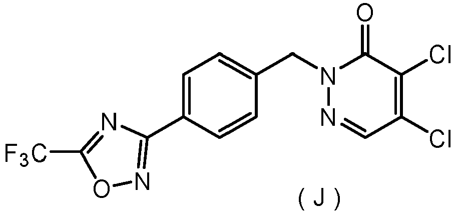 Patent document 4 discloses the compound of formula (D), and the like.

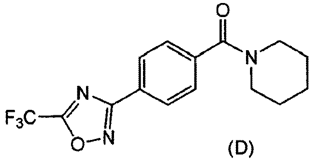

Patent document 5 discloses the compound of formula (E), and the like.

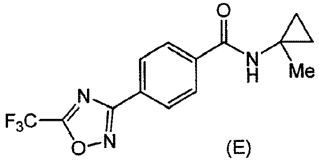

Patent document 6 discloses the compound of formula (F), and the like.

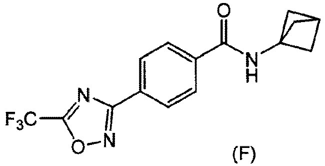

Patent document 7 discloses the compounds of formula (K) and formula (L).

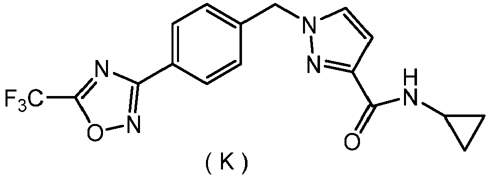

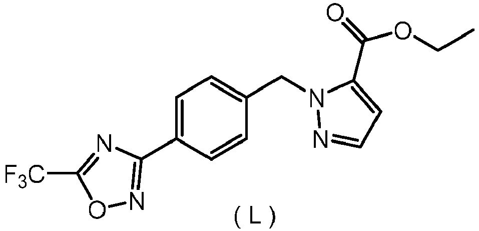

Patent document 8 discloses the compound of formula (M) .

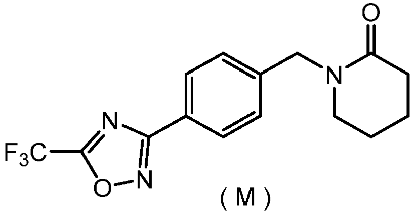

### Prior Art Documents

### Patent Documents

[Patent Document 1] Japanese unexamined Patent Application Publication No. 2011-140484
[Patent Document 2] Japanese unexamined Patent Application Publication No. 2012-97068
[Patent Document 3] WO 2019/022061A
[Patent Document 4] WO 2015/185485A
[Patent Document 5] WO 2017/211650A
[Patent Document 6] WO 2018/184970A
[Patent Document 7] WO 2017/118689A
[Patent Document 8] WO 2017/093348A

### Summary of the Invention

### Object to be Solved by the Invention

The present invention aims to provide a method for reducing or preventing an abiotic stress on a plant.

### Means to Solve the Object

As a result of extensive studies, the present inventor has found that a plant treated with a 5-membered heterocyclyl compound has an alleviating effect on an influence of exposure to an abiotic stress, thereby achieving the present invention.

The present invention includes the following embodiments.
[1] A method for reducing or preventing an influence of an abiotic stress on a plant, comprising treating a plant exposed to the abiotic stress or a non-exposed plant with at least one compound selected from the group consisting of the compounds of the following formula (I) and formula (II): 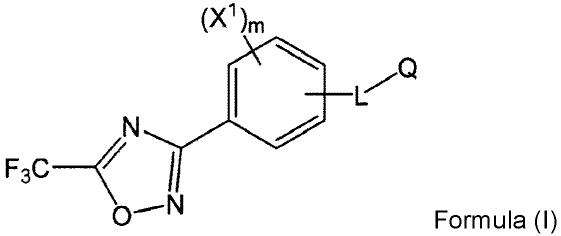 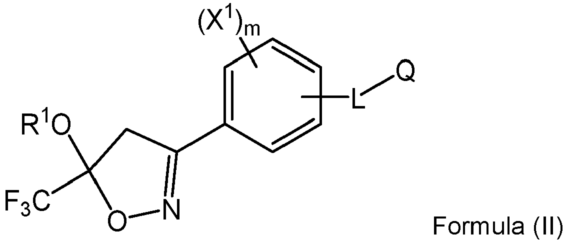
   In formula (I) and formula (II),
   Q denotes a group of formula (Q-1), formula (Q-2), formula (Q-3), formula (Q-4), formula (Q-5), or formula (Q-6), 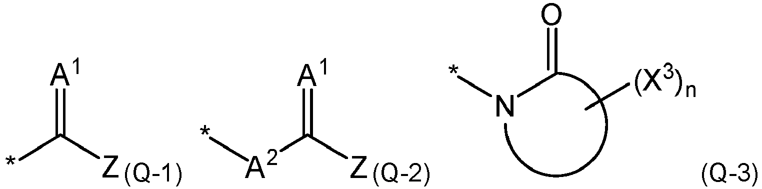 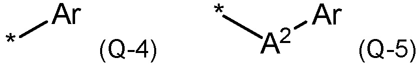 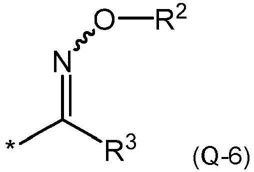 In formula (Q-1), formula (Q-2), formula (Q-3), formula (Q-4), formula (Q-5), and formula (Q-6), * denotes a binding position,
   Z denotes a C1-6 alkyl group, a C1-6 alkyl group having one or more X², a C2-6 chain unsaturated hydrocarbon group, a C2-6 chain unsaturated hydrocarbon group having one or more X², a C3-8 cycloalkyl group, a C3-8 cycloalkyl group having one or more X³, a C6-10 aryl group, a C6-10 aryl group having one or more X³, a 5- to 6-membered heterocyclyl group, a 5- to 6-membered heterocyclyl group having one or more X³, a hydroxyl group, a group represented by RO-, a group represented by RS-, an amino group, a group represented by RNH-, or a group represented by R₂N-,
   R each independently denotes a C1-6 alkyl group, a C1-6 alkyl group having one or more X², a C2-6 chain unsaturated hydrocarbon group, a C2-6 chain unsaturated hydrocarbon group having one or more X², a C3-8 cycloalkyl group, a C3-8 cycloalkyl group having one or more X³, a C5-9 bicycloalkyl group, a C5-9 bicycloalkyl group having one or more X³, a C6-10 aryl group, a C6-10 aryl group having one or more X³, a 5- to 6-membered heterocyclyl group, or a 5- to 6-membered heterocyclyl group having one or more X³,
   in the above group represented by R₂N-, R and R are optionally joined to form a 4- to 6-membered ring together with the nitrogen atom to which they are attached, and the 4- to 6-membered ring optionally has one or more X²,
   X² denotes a halogeno group, a C3-8 cycloalkyl group, a C3-8 cycloalkyl group having one or more G², a C6-10 aryl group, a C6-10 aryl group having one or more G², a 5- to 6-membered heterocyclyl group, a 5- to 6-membered heterocyclyl group having one or more G², a group represented by R^{a}O-, a group represented by R^{a}S(O)ₙ₁-, a group represented by R^{a}-CO-, a group represented by R^{a}O-CO-, a group represented by R^{a}NH-, a group represented by R^{a}₂N-, a carbamoyl group, a group represented by R^{a}NH-CO-, a group represented by R^{a}₂N-CO-, an oxo group (O=), an imino group (HN=), a hydroxyimino group (HO-N=), a divalent group represented by R^{a}O-N=, or a cyano group,
   X³ denotes a halogeno group, a C1-6 alkyl group, a C1-6 alkyl group having one or more G¹, a C2-6 chain unsaturated hydrocarbon group, a C2-6 chain unsaturated hydrocarbon group having one or more G¹, a C3-8 cycloalkyl group, a C3-8 cycloalkyl group having one or more G², a C6-10 aryl group, a C6-10 aryl group having one or more G², a 5- to 6-membered heterocyclyl group, a 5- to 6-membered heterocyclyl group having one or more G², a hydroxyl group, a group represented by R^{a}O-, a group represented by R^{a}S(O)ₙ₁-, a group represented by R^{a}-CO-, a carboxyl group, a group represented by R^{a}O-CO-, an amino group, a group represented by R^{a}NH-, a group represented by R^{a}₂N-, a carbamoyl group, a group represented by R^{a}NH-CO-, a group represented by R^{a}₂N-CO-, a group represented by HO-N=CH-, or a group represented by R^{a}O-N=CH-,
   n1 denotes an integer of 0 to 2,
   R^{a} each independently denotes a C1-6 alkyl group, a C1-6 alkyl group having one or more G¹, a C2-6 chain unsaturated hydrocarbon group, a C2-6 chain unsaturated hydrocarbon group having one or more G¹, a C3-8 cycloalkyl group, a C3-8 cycloalkyl group having one or more G², a C6-10 aryl group, a C6-10 aryl group having one or more G², a 5- to 6-membered heterocyclyl group, or a 5- to 6-membered heterocyclyl group having one or more G²,
   G¹ each independently denotes a halogeno group, a hydroxyl group, a C1-6 alkoxy group, a C1-6 haloalkoxy group, a C1-6 alkylthio group, a C1-6 alkylsulfinyl group, a C1-6 alkylsulfonyl group, a C3-8 cycloalky group, a C6-10 aryl group, a C6-10 aryl group having one or more g¹, a 5- to 6-membered heterocyclyl group, a 5- to 6-membered heterocyclyl group having one or more g¹, an oxo group (O=), or an N-C1-6 alkoxyimino group, or a cyano group,
   G² each independently denotes a halogeno group, a C1-6 alkyl group, a C1-6 haloalkyl group, a hydroxyl group, a C1-6 alkoxy group, a C1-6 alkylthio group, a C1-6 alkylsulfinyl group, a C1-6 alkylsulfonyl group, a C3-8 cycloalky group, a C6-10 aryl group, a C6-10 aryl group having one or more g¹, a 5- to 6-membered heterocyclyl group, a 5- to 6-membered heterocyclyl group having one or more g¹, a nitro group, or a cyano group,
   g¹ each independently denotes a halogeno group, a C1-6 alkyl group, a C1-6 haloalkyl group, a C1-6 alkoxy group, a C1-6 haloalkoxy group, a nitro group, or a cyano group,
   in the group represented by R^{a}₂N- and the group represented by R^{a}₂N-CO- mentioned above, R^{a} and R^{a} are optionally joined to form a 4- to 6-membered ring together with the nitrogen atom to which they are attached, and the 4- to 6-membered ring optionally has one or more G¹,
   in formula (Q-3), the partial structure represented by formula (q-3) denotes a 5- to 6-membered ring composed of the nitrogen atom attached to L in formula (I) and the carbon atom of the carbonyl adjacent thereto, and 3 to 4 ring atoms each independently selected from a carbon atom, a nitrogen atom, an oxygen atom, and a sulfur atom, wherein the bond between the ring atoms is a single bond or double bond, * denotes a binding position, and X³ in formula (Q-3) denotes a substituent on the 5- to 6-membered ring, 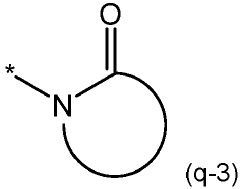 n is a chemically acceptable number of X³ and denotes any integer of 0 to 4 wherein when n is 2 or more, X³ is the same or different from each other, and adjacent X³ and X³ are optionally joined to form a 5- to 6-membered ring together with two carbon atoms to which they are each attached,
   X¹ denotes a C1-6 alkyl group, a C1-6 haloalkyl group, a C1-6 alkoxy group, a C1-6 haloalkoxy group, or a halogeno group,
   m is a chemically acceptable number of X¹ and denotes any integer of 0 to 4 wherein when m is 2 or more, X¹ is the same or different from each other,
   L denotes a single bond, a C1-6 alkylene group, or a C1-6 alkylene group having one or more X⁴,
   X⁴ each independently denotes a halogeno group, a C1-6 alkyl group, a hydroxyl group, a C1-6 alkoxy group, a C1-6 haloalkoxy group, a C1-6 alkylthio group, a C1-6 alkylsulfinyl group, a C1-6 alkylsulfonyl group, an oxo group (O=), or an N-C1-6 alkoxyimino group,
   wherein when there are two or more X⁴, X⁴ and X⁴ are optionally joined to form a C2-5 alkylene group,
   A¹ denotes an oxygen atom or a sulfur atom,
   A² denotes an oxygen atom, a group represented by - NH-, a group represented by -NR^{a}-, or a group represented by -N(OR^{a})-,
   Ar denotes a C6-10 aryl group, a C6-10 aryl group having one or more X³, a 2-oxo-1,2-dihydropyridyl group, a 2-oxo-1,2-dihydropyridyl group having one or more X³, a 5-to 6-membered heterocyclyl group, or a 5- to 6-membered heterocyclyl group having one or more X³,
   R² denotes a hydrogen atom, a C1-6 alkyl group, a C1-6 alkyl group having one or more X², a C2-6 chain unsaturated hydrocarbon group, or a C2-6 chain unsaturated hydrocarbon group having one or more X²,
   R³ denotes a hydrogen atom, a C1-6 alkyl group, or a C1-6 alkyl group having one or more X², and
   in formula (II), R¹ denotes a hydrogen atom, or a C1-6 alkyl group.
[2] The method according to [1], wherein formula (Q-1) is formula (Q-1-A). 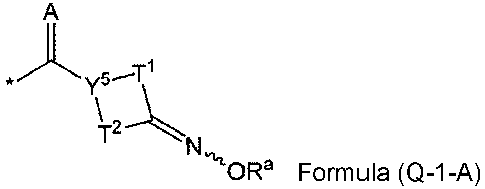
   In formula (Q-1-A), * denotes a binding position,
   T¹ denotes a C1-6 alkylene group, or a C1-6 alkylene group having one or more X⁵,
   T² denotes a C1-6 alkylene group, or a C1-6 alkylene group having one or more X⁵,
   X⁵ each independently denotes a halogeno group, a C1-6 alkyl group, a hydroxyl group, a C1-6 alkoxy group, a C1-6 haloalkoxy group, a C1-6 alkylthio group, a C1-6 alkylsulfinyl group, or a C1-6 alkylsulfonyl group,
   Y⁵ denotes a nitrogen atom, and
   R^{a} has the same meaning as in [1].
[3] The method according to [1], wherein formula (Q-3) is formula (Q-3-A). 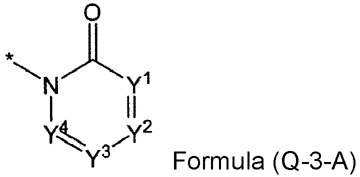
   In formula (Q-3-A), * denotes a binding position,
   Y¹ denotes a nitrogen atom, CH, or CX³,
   Y² denotes a nitrogen atom, CH, or CX³,
   Y³ denotes a nitrogen atom, CH, or CX³, and
   Y⁴ denotes a nitrogen atom, CH, or CX³,
   with the proviso that two or more of Y¹ to Y⁴ are not nitrogen atoms,
   X³ being adjacent are optionally joined together to form a 5- to 6-membered ring together with two carbon atoms to which they are each attached, and
   X³ has the same meaning as in [1].
[4] The method according to any one of [1] to [3], wherein the abiotic stress is drought stress.
[5] The method according to any one of [1] to [3], wherein the abiotic stress is salt stress.
[6] The method according to any one of [1] to [5], wherein the treatment is a spraying treatment, a soil irrigation treatment, a seed treatment or a hydroponic treatment.

### Effect of the Invention

The present invention can be used to reduce or prevent an influence of an abiotic stress on a plant.

### Mode of Carrying Out the Invention

### [Abiotic Stress]

As used herein, the term "abiotic stress" refers to stresses such as high temperature stress, low temperature stress, salt stress, and drought stress. When a plant is exposed to abiotic stresses, the physiological function of its cells declines, the physiological state of the plant deteriorates, and growth is inhibited.

High temperature stress refers to the stress received when exposed to a temperature higher than the optimum temperature for growth or germination of the plant, and specifically, conditions in which the average cultivation temperature in the environment in which the plant is cultivated is 25°C or higher, more severely 30°C or higher, and still more severely 35°C or higher may be exemplified.

Low temperature stress refers to the stress received when exposed to a temperature lower than the optimum temperature for growth or germination of the plant, and specifically, conditions in which the average cultivation temperature in the environment in which the plant is cultivated is 15°C or lower, more severely 10°C or lower, and still more severely 5°C or lower may be exemplified.

Drought stress refers to the stress received when exposed to a water environment in which the water content of the soil decreases due to a decrease in rainfall or irrigation, which inhibits water absorption and inhibits the plant's growth. Specifically, conditions in which the moisture content of the soil in which the plant is cultivated is 15% by weight or less, more severely 10% by weight or less, and still more severely 7.5% by weight or less or, alternatively, conditions in which the pF value of the soil in which the plant is cultivated is 2.3 or more, severely 2.7 or more, and more severely 3.0 or more may be exemplified though the values may vary depending on the type of soil.

Here, the pF value is the value as defined in "pF Value Measurement Method" on pages 61 to 62 of "Encyclopedia of Soil, Plant Nutrition and Environment" (Taiyosha, 1994, Matsuzaka et al.).

Salt stress refers to the stress received when exposed to an environment in which growth is inhibited as a result of increased osmotic pressure due to accumulation of salts in the soil in which the plant is cultivated or in the water culture medium, which inhibits the plant's water absorption.

In general, for cultivated plants such as agricultural crops, the appropriate cultivation conditions are known for each plant. If the plant is cultivated under such suitable cultivation conditions or conditions close thereto, the plant is not under stress. When a plant is exposed to abiotic stresses, the physiological and metabolic functions in the organism are reduced, which affects normal growth. As a result of exposure to stress, effects such as reduced germination rate, reduced seedling establishment rate, increased leaf mortality, reduced plant height, reduced plant weight, delayed leaf area growth, leaf discoloration, reduced number or weight of seeds or fruits, decline in the quality of the harvest, reduced flower development rate and fruit development rate, reduced chlorophyll fluorescence yield, decreased water content, increased foliage temperature, and reduced transpiration ability will occur.

### [5-Membered Heterocyclyl Compound]

The present invention is a method for reducing or preventing an influence of an abiotic stress on a plant by using a specific 5-membered heterocyclyl compound.

The 5-membered heterocyclyl compound used in the present invention is a compound of formula (I) or formula (II) .

Hereinafter, each term used in the present description will be described.

The term "C1-6 alkyl group" means a linear or branched saturated hydrocarbon group having 1 to 6 carbon atoms.

Specifically, a methyl group, an ethyl group, an n-propyl group, an i-propyl group, an n-butyl group, an s-butyl group, an i-butyl group, a t-butyl group, an n-pentyl group, an n-hexyl group, or the like may be exemplified.

The term "C2-6 chain unsaturated hydrocarbon group" means a linear or branched hydrocarbon group having 2 to 6 carbon atoms and including at least one double or triple bond, and includes those having two or more double or triple bonds such as a butadienyl group, a butadiynyl group, a pentadienyl group and a pentadiynyl group in addition to "C2-6 alkenyl groups" and "C2-6 alkynyl groups".

The "C2-6 alkenyl group" means a linear or branched hydrocarbon group having 2 to 6 carbon atoms and including one double bond.

Specifically, a vinyl group, a 1-propenyl group, a 2-propenyl group (allyl group), a 1-butenyl group, a 2-butenyl group, a 3-butenyl group, a 1-methyl-2-propenyl group, a 2-methyl-2-propenyl group, or the like may be exemplified.

The term "C2-6 alkynyl group" means a linear or branched hydrocarbon group having 2 to 6 carbon atoms and including one triple bond.

Specifically, an ethynyl group, a 1-propynyl group, a 2-propynyl group, a 1-butynyl group, a 2-butynyl group, a 3-butynyl group, a 1-methyl-2-propynyl group, or the like may be exemplified.

The term "C3-8 cycloalkyl group" means a saturated monocyclic hydrocarbon group having 3 to 8 carbon atoms, in which the carbon atoms are arranged in the form of a ring (also referred to as a monocyclic carbocyclic group).

Specifically, a cyclopropyl group, a cyclobutyl group, a cyclopentyl group, a cyclohexyl group, or the like may be exemplified.

The term "C6-10 aryl group" means monocyclic and bicyclic hydrocarbon groups having 6 to 10 carbon atoms, in which the carbon atoms are arranged in the form of a ring and at least one ring is aromatic. It is also referred to as an aromatic group.

Specifically, a phenyl group, a naphthyl group, or the like may be exemplified.

The term "5- to 6-membered heterocyclyl group" means a 5- to 6-membered saturated or partially unsaturated heterocyclyl group that is a cyclic group composed of 5 to 6 ring atoms, and in which 1 to 4 ring atoms each independently are a heteroatom selected from nitrogen, oxygen, or sulfur; or a 5- to 6-membered heteroaryl group that is a cyclic group composed of 5 to 6 ring atoms and in which 1 to 4 ring atoms each independently are a heteroatom selected from nitrogen, oxygen, or sulfur.

Specifically, as the 5-membered saturated heterocyclyl group, a pyrrolidinyl group, a tetrahydrofuranyl group, a thiazolidinyl group, or the like may be exemplified.

As the 6-membered saturated heterocyclyl group, a piperidyl group, a piperazinyl group, a morpholinyl group, a dioxolanyl group, a dioxanyl group, or the like may be exemplified.

As the 5-membered heteroaryl group, a pyrrolyl group, a furyl group, a thienyl group, an imidazolyl group, a pyrazolyl group, an oxazolyl group, an isooxazolyl group, a thiazolyl group, an isothiazolyl group, a triazolyl group, an oxadiazolyl group, a thiadiazolyl group, a tetrazolyl group, or the like may be exemplified.

As the 6-membered heteroaryl group, a pyridyl group, a pyrazinyl group, a pyrimidinyl group, a pyridazinyl group, a triazinyl group, or the like may be exemplified.

As the 5-membered partially unsaturated heterocyclic group, a pyrrolinyl group, a dihydrofuranyl group, an imidazolinyl group, a pyrazolinyl group, an oxazolinyl group, an isooxazolinyl group, or the like may be exemplified.

As the 6-membered partially unsaturated heterocyclic group, a dihydropyranyl group, or the like may be exemplified.

The term "C5-9 bicycloalkyl group" means a saturated bicyclic hydrocarbon group having 5 to 9 carbon atoms, in which the carbon atoms are arranged in the form of a ring (also referred to as a bicyclic carbocyclic group).

Specifically, a bicyclopentyl group, a bicyclohexyl group, a bicycloheptyl group, a bicyclooctyl group, or the like may be exemplified.

More specifically, a bicyclo[1.1.1]pentan-1-yl group, a bicyclo[2.1.1]hexan-1-yl group, a bicyclo[2.1.1]hexan-5-yl group, a bicyclo[2.2.1]heptan-1-yl group, a bicyclo[2.2.1]heptan-2-yl group, a bicyclo[2.2.1]heptan-7-yl group, a bicyclo[3.1.1]heptan-3-yl group, a bicyclo[3.1.1]heptan-6-yl group, a bicyclo[2.2.2]octan-1-yl group, a bicyclo[3.2.1]octan-3-yl group, a bicyclo[3.2.1]octan-8-yl group, or the like may be exemplified.

The term "halogeno group" means a fluoro group, a chloro group, a bromo group or an iodo group.

The term "C1-6 alkoxy group" means a group made by a combination of a C1-6 alkyl group and a hydroxyl group.

Specifically, a methoxy group, an ethoxy group, an n-propoxy group, an i-propoxy group, an n-butoxy group, an s-butoxy group, an i-butoxy group, and a t-butoxy group, or the like may be exemplified.

The term "C1-6 alkylthio group" means a group made by a combination of a C1-6 alkyl group and a thiol group.

Specifically, a methylthio group, an ethylthio group, an n-propylthio group, an i-propylthio group, an n-butylthio group, an i-butylthio group, an s-butylthio group, a t-butylthio group, or the like may be exemplified.

The term "C1-6 alkylsulfinyl group" means a group made by a combination of a C1-6 alkyl group and a sulfinyl group.

Specifically, a methylsulfinyl group, an ethylsulfinyl group, a t-butylsulfinyl group, or the like may be exemplified.

The term "C1-6 alkylsulfonyl group" means a group made by a combination of a C1-6 alkyl group and a sulfonyl group.

Specifically, a methylsulfonyl group, an ethylsulfonyl group, a t-butylsulfonyl group, or the like may be exemplified.

The term "C1-6 haloalkyl group" means a C1-6 alkyl group substituted with a halogeno group.

Specifically, a chloromethyl group, a chloroethyl group, a difluoromethyl group, a trifluoromethyl group, a 2,2,2-trifluoroethyl group, a 1-fluoro-n-butyl group, a perfluoro-n-pentyl group, or the like may be exemplified.

The term "C1-6 haloalkoxy group" means a C1-6 alkoxy group substituted with a halogeno group.

Specifically, a trifluoromethoxy group, a 2-chloro-n-propoxy group, a 2,3-dichlorobutoxy group, and a 2,2,2-trifluoroethoxy group, or the like may be exemplified.

The term "N-C1-6 alkoxyimino group" means a divalent group made by a combination of an imino group (HN=) substituted with a C1-6 alkoxy group.

Specifically, an N-methoxyimino group, an N-ethoxyimino group, or the like may be exemplified.

The term "C1-6 alkylene group" means a divalent C1-6 alkyl group. C2 and above are also referred to as polymethylene groups.

Specifically, a methylene group, a dimethylene group, a trimethylene group, a tetramethylene group, a pentamethylene group, or the like may be exemplified.

The "4- to 6-membered ring" optionally formed by the bonding of R and R together with the nitrogen atom to which they are attached in the group represented by R₂N- is a ring composed of the above-mentioned nitrogen atom and 3 to 5 ring atoms each independently selected from a carbon atom, a nitrogen atom, an oxygen atom, and a sulfur atom, wherein the bonds between the ring atoms are single bonds or double bonds.

Specifically, an azetidine ring, a pyrrolidine ring, a piperidine ring, a piperazine ring, a morpholine ring, a thiomorpholine ring, or the like may be exemplified.

The "4- to 6-membered ring" optionally formed by the bonding of R^{a} and R^{a} together with the nitrogen atom to which they are attached in the group represented by R^{a}₂N- and the group represented by R^{a}₂N-CO- also indicates the same meaning.

The group represented by formula (q-3) in formula (Q-3) will be described. In formula (q-3), * denotes an attachment point. 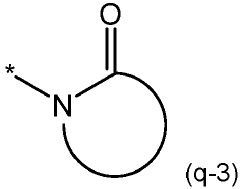 The group represented by formula (q-3) is a ring composed of the nitrogen atom attached to L in formula (I) and the carbon atom of the carbonyl adjacent thereto, as well as 3 to 4 ring atoms each independently selected from a carbon atom, a nitrogen atom, an oxygen atom, and a sulfur atom, wherein the bonds between the ring atoms are single bonds or double bonds.

Specifically, a pyrrolidin-2-one ring, an oxazolidin-2-one ring, a piperidin-2-one ring, a 1,3-oxazinan-2-one ring, a morpholin-3-one ring, a pyridin-2(1H)-one ring, a pyridazin-3(2H)-one ring, a pyrimidin-4(3H)-one ring, or the like may be exemplified.

The "5- to 6-membered ring" optionally formed by the bonding of X³ and X³ together with two carbon atoms to which they are each attached is a ring composed of two adjacent carbon atoms and 3 to 4 ring atoms each independently selected from a carbon atom, a nitrogen atom, an oxygen atom, and a sulfur atom, wherein the bonds between the ring atoms are single bonds or double bonds.

Specifically, when there is a single bond between the two adjacent carbon atoms, it is a cyclopentane ring, a cyclohexane ring, or the like; and when there is a double bond between the two adjacent carbon atoms, it is a cyclopentene ring, a cyclohexene ring, a benzene ring, a pyrrole ring, a pyrazole ring, an imidazole ring, a pyridine ring, or the like.

As the embodiments of the compound of formula (I), the following compounds may be exemplified.
[Embodiment 1] A compound of formula (I), wherein:
   Q is a group represented by formula (Q-1),
   A¹ is an oxygen atom,
   Z is a group represented by R₂N-,
   in the group represented by R₂N-, R and R are optionally joined to form a 4- to 6-membered ring together with the nitrogen atom to which they are attached, and the 4- to 6-membered ring optionally has one or more X²,
   L is a single bond,
   X¹ is a halogeno group, and m is any integer of 0 to 4.
[Embodiment 2] A compound wherein, in Embodiment 1, the 4-to 6-membered ring formed by the bonding of R and R together with the nitrogen atom to which they are attached in the group represented by R₂N- is any one of an azetidine ring, a pyrrolidine ring, a piperidine ring, a piperazine ring, a morpholine ring, and a thiomorpholine ring.
[Embodiment 3] A compound wherein, in Embodiment 1, the 4-to 6-membered ring formed by the bonding of R and R together with the nitrogen atom to which they are attached in the group represented by R₂N- is a piperidine ring.

As the embodiments of the compound of formula (I), the following compounds may be exemplified.
[Embodiment 4] A compound of formula (I), wherein:
   Q is a group represented by formula (Q-1),
   A¹ is an oxygen atom,
   Z is a group represented by RNH-,
   L is a single bond,
   X¹ is a halogeno group, and
   m is any integer of 0 to 4.
[Embodiment 5] A compound wherein, in Embodiment 4, R is a C3-8 cycloalkyl group, a C3-8 cycloalkyl group having one or more X3, a C5-9 bicycloalkyl group, or a C5-9 bicycloalkyl group having one or more X³.
[Embodiment 6] A compound wherein, in Embodiment 4, R is a C3-8 cycloalkyl group or a C3-8 cycloalkyl group having one or more X³.
[Embodiment 7] A compound wherein, in Embodiment 4, R is a C5-9 bicycloalkyl group, or a C5-9 bicycloalkyl group having one or more X³.
[Embodiment 8] A compound wherein, in Embodiments 5 to 7, X³ is a C1-6 alkyl group.
[Embodiment 9] A compound wherein, in Embodiment 4, R is a 1-methylcyclopropyl group.
[Embodiment 10] A compound wherein, in Embodiment 4, R is a bicyclo[1.1.1]pentan-1-yl group.

As the embodiments of the compound of formula (I), the following compounds may be exemplified.
[Embodiment 11] A compound of formula (I), wherein:
   Q is a group represented by formula (Q-4),
   Ar is a 5- to 6-membered heterocyclyl group, or a 5- to 6-membered heterocyclyl group having one or more X³,
   L is a C1-6 alkylene group, or a C1-6 alkylene group having one or more X⁴,
   X¹ is a halogeno group, and
   m is any integer of 0 to 4.
[Embodiment 12] A compound wherein, in Embodiment 11, L is a C1-6 alkylene group.
[Embodiment 13] A compound wherein, in Embodiment 11, L is a C1-6 alkylene group having one or more X⁴, and X⁴ is a C1-6 alkyl group or a C1-6 alkoxy group.
[Embodiment 14] A compound wherein, in Embodiments 11 to 13, Ar is a 5- to 6-membered heterocyclyl group.
[Embodiment 15] A compound wherein, in Embodiments 11 to 13, Ar is a 5- to 6-membered heterocyclyl group having one or more X³.
[Embodiment 16] A compound wherein, in Embodiments 11 to 13, Ar is a 5-membered heteroaryl group having one or more X³.
[Embodiment 17] A compound wherein, in Embodiments 11 to 13, Ar is a pyrazolyl group having one or more X³.
[Embodiment 18] A compound wherein, in Embodiments 11 to 17, X³ is a carboxyl group, a group represented by R^{a}O-CO-, a carbamoyl group, a group represented by R^{a}NH-CO-, or a group represented by R^{a}2N-CO-.
[Embodiment 19] A compound wherein, in Embodiment 18, R^{a} is a C1-6 alkyl group, a C1-6 alkyl group having one or more G1, a C3-8 cycloalkyl group, or a C3-8 cycloalkyl group having one or more G².

As the embodiments of the compound of formula (I), the following compounds may be exemplified.
[Embodiment 20] A compound of formula (I), wherein:
   Q is a group represented by formula (Q-3),
   L is a C1-6 alkylene group, or a C1-6 alkylene group having one or more X⁴,
   X¹ is a halogeno group, and
   m is any integer of 0 to 4.
[Embodiment 21] A compound wherein, in Embodiment 20:
   the group represented by formula (q-3) in formula (Q-3) is a piperidin-2-one ring,
   X³ is a halogeno group, a C1-6 alkyl group, or a group represented by R^{a}O-,
   R^{a} is a C1-6 alkyl group, and
   n is any integer of 0 to 4.
[Embodiment 22] A compound wherein, in Embodiment 20:
   the group represented by formula (q-3) in formula (Q-3) is a pyridazin-3(2H)-one ring,
   X³ is a halogeno group, a C1-6 alkyl group, or a group represented by R^{a}O-,
   R^{a} is a C1-6 alkyl group, and
   n is any integer of 0 to 4.
[Embodiment 23] A compound wherein, in Embodiment 20:
   the group represented by formula (q-3) in formula (Q-3) is a pyrimidin-4(3H)-one ring,
   X³ is a halogeno group, a C1-6 alkyl group, or a group represented by R^{a}O-,
   R^{a} is a C1-6 alkyl group, and
   n is any integer of 0 to 4.
[Embodiment 24] A compound wherein, in Embodiment 20:
   the group represented by formula (q-3) in formula (Q-3) is a pyrimidin-4(3H)-one ring,
   X³ is a group represented by R^{a}₂N-,
   in the group represented by R^{a}₂N-, R^{a} and R^{a} are joined to form a 4-membered ring together with the nitrogen atom to which they are attached,
   an N-C1-6 alkoxyimino group is on the formed 4-membered ring, and
   n is an integer of 1.

As the embodiments of the compound of formula (I), the following compounds may be exemplified.
[Embodiment 25] A compound of formula (I), wherein:
   Q is a group represented by formula (Q-1),
   A¹ is an oxygen atom,
   Z is a group represented by R₂N-,
   in the group represented by R₂N-, R and R are joined to form a 4- to 6-membered ring together with the nitrogen atom to which they are attached, and the 4- to 6-membered ring optionally has one or more X²,
   L is a C1-6 alkylene group, or a C1-6 alkylene group having one or more X⁴,
   X¹ is a halogeno group, and
   m is any integer of 0 to 4.
[Embodiment 26] A compound wherein, in Embodiment 25, L is a C1-6 alkylene group.
[Embodiment 27] A compound wherein, in Embodiment 25, L is a C1-6 alkylene group having one or more X⁴, and X⁴ is a C1-6 alkyl group or a C1-6 alkoxy group.
[Embodiment 28] A compound wherein, in Embodiments 25 to 27, R and R are joined to form an azetidine ring together with the nitrogen atom to which they are attached, and the azetidine ring optionally has one or more X².
[Embodiment 29] A compound wherein, in Embodiment 28, X² is a group represented by R^{a}O-N=.

As the embodiments of the compound of formula (I), the following compounds may be exemplified.
[Embodiment 30] A compound of formula (I), wherein:
   Q is a group represented by formula (Q-5),
   Ar is a 5- to 6-membered heterocyclyl group, or a 5- to 6-membered heterocyclyl group having one or more X³,
   A² is an oxygen atom,
   L is a C1-6 alkylene group, or a C1-6 alkylene group having one or more X⁴,
   X¹ is a halogeno group, and
   m is any integer of 0 to 4.
[Embodiment 31] A compound wherein, in Embodiment 30, L is a C1-6 alkylene group.
[Embodiment 32] A compound wherein, in Embodiment 30, L is a C1-6 alkylene group having one or more X⁴, and X⁴ is a C1-6 alkyl group or a C1-6 alkoxy group.
[Embodiment 33] A compound wherein, in Embodiments 30 to 32, Ar is a 6-membered heteroaryl group.
[Embodiment 34] A compound wherein, in Embodiments 30 to 32, Ar is a 6-membered heteroaryl group having one or more X³.
[Embodiment 35] A compound wherein, in Embodiments 30 to 32, Ar is a pyrimidinyl group having one or more X³.

As the embodiments of the compound of formula (I), the following compounds may be exemplified.
[Embodiment 36] A compound of formula (I), wherein:
   Q is a group represented by formula (Q-5),
   Ar is a 2-oxo-1,2-dihydropyridyl group, or a 2-oxo-1,2-dihydropyridyl group having one or more X³,
   A² is an oxygen atom,
   L is a C1-6 alkylene group, or a C1-6 alkylene group having one or more X⁴,
   X¹ is a halogeno group, and
   m is any integer of 0 to 4.
[Embodiment 37] A compound wherein, in Embodiment 36, L is a C1-6 alkylene group.
[Embodiment 38] A compound wherein, in Embodiment 36, L is a C1-6 alkylene group having one or more X⁴, and X⁴ is a C1-6 alkyl group or a C1-6 alkoxy group.

As the embodiments of the compound of formula (II), the following compounds may be exemplified.
[Embodiment 39] A compound of formula (II), wherein:
Q is a group represented by formula (Q-6),
L is a single bond,
X¹ is a halogeno group, and
m is any integer of 0 to 4.

As the embodiments of the compound of formula (I), the following compounds may be exemplified.
[Embodiment 40] A compound of formula (I), wherein:
   Q is a group represented by formula (Q-1),
   A¹ is an oxygen atom,
   Z is a group represented by RNH-,
   R is a C6-10 aryl group having one or more X³,
   L is a single bond,
   X¹ is a halogeno group, and
   m is any integer of 0 to 4.
[Embodiment 41] A compound wherein, in Embodiment 40, R is a 2-fluorophenyl group.

As the embodiments of the compound of formula (I), the following compounds may be exemplified.
[Embodiment 42] A compound of formula (I), wherein:
Q is a group represented by formula (Q-1), and formula (Q-1) is formula (Q-1-A),
T¹ is a methylene group, and T² is a methylene group.

As the embodiments of the compound of formula (I), the following compounds may be exemplified.
[Embodiment 43] A compound of formula (I), wherein:
   Q is a group represented by formula (Q-3), and formula (Q-3) is formula (Q-3-A),
   Y⁴ is a nitrogen atom, Y² is CH, Y³ is CH, and
   Y¹ is CX³.
[Embodiment 44] A compound wherein, in Embodiment 43, X³ is a group represented by R^{a}O-, and R^{a} is a C1-6 alkyl group.
[Embodiment 45] A compound of formula (I), wherein:
   Q is a group of formula (Q-3), and formula (Q-3) is formula (Q-3-A),
   Y⁴ is a nitrogen atom, Y³ is CH,
   Y² is CX³, and Y¹ is CX³.
[Embodiment 46] A compound of formula (I), wherein:
   Q is a group represented by formula (Q-3), and formula (Q-3) is formula (Q-3-A),
   Y⁴ is a nitrogen atom, Y¹ is CH, Y² is CH, and Y³ is CH.

The 5-membered heterocyclyl compound used in the present invention is not particularly limited by the production method thereof. For example, it may be obtained by the production method described in the above-mentioned patent documents and the like.

Specific examples of the 5-membered heterocyclyl compound are shown in Tables 1, 2 and 3 below. For the compounds shown in Table 3, the physical properties of the compounds are also shown.

**[Table 1]**

| Compound Number | Structural Formula |
|---|---|
| A | 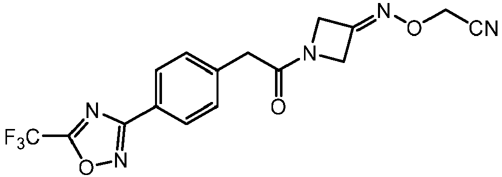 |
| B | 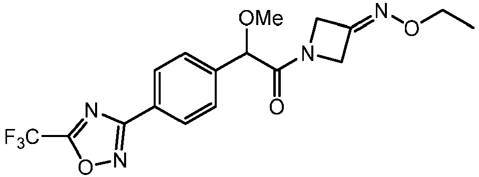 |
| C | 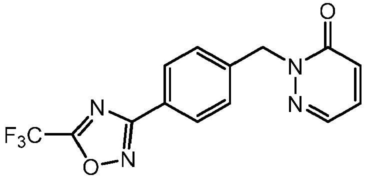 |
| D | 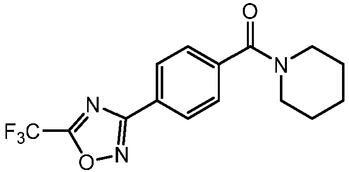 |
| E | 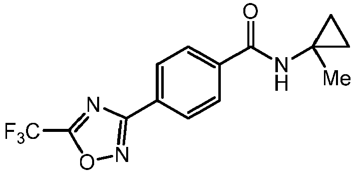 |
| F | 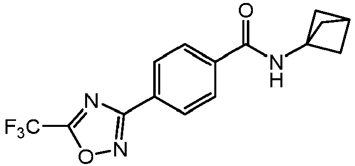 |

**[Table 2]**

| Compound Number | Structural Formula |
|---|---|
| G | 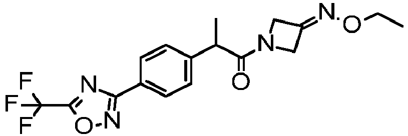 |
| H | 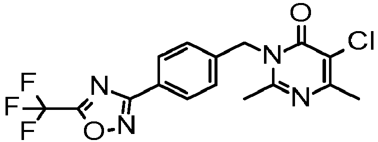 |
| J | 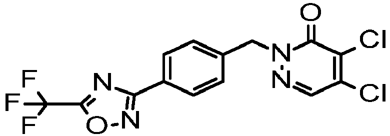 |
| K | 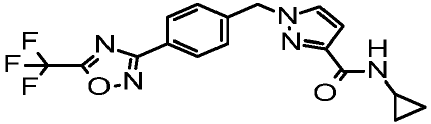 |
| L | 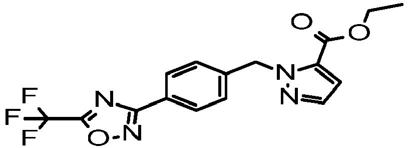 |
| M | 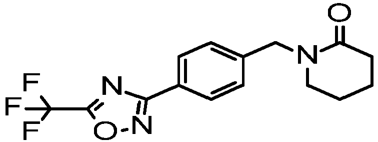 |

**[Table 3]**

| Compound Number | Structural Formula | Physical Properties |
|---|---|---|
| 1 | 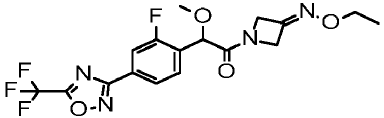 | Viscous oil |
| 2 | 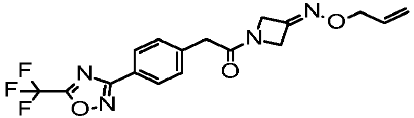 | m.p. 135-137°C |
| 3 | 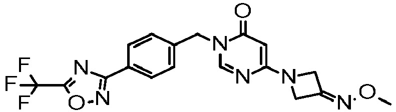 | m.p. 264-266°C |
| 4 | 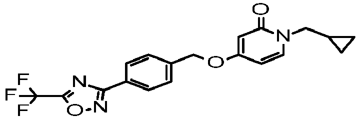 | m.p. 115-117°C |
| 5 | 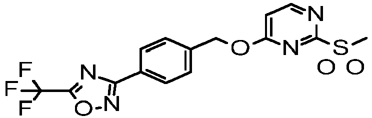 | m.p. 103-106°C |
| 6 | 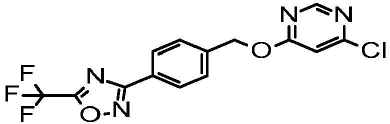 | m.p. 144-146°C |
| 7 | 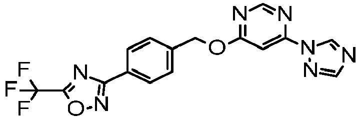 | Amorphous |
| 8 | 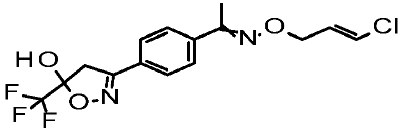 | m.p. 126-128°C |
| 9 | 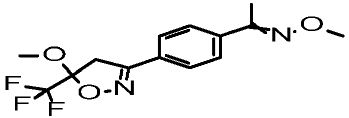 | m.p. 80-82°C |
| 10 | 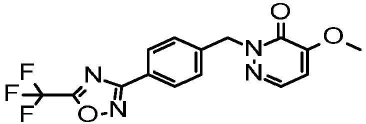 | m.p. 119-120°C |
| 11 | 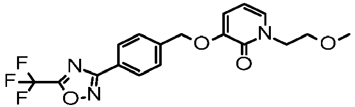 | m.p. 127-130°C |

### [Treatment with 5-Membered Heterocyclyl Compound]

The plant to be treated with the 5-membered heterocyclyl compound used in the present invention may be a plant exposed to an abiotic stress or a plant that has not yet been exposed but is likely to be exposed. That is, it may also be preventively applied to a plant before it is exposed to drought stress.

The time of treatment with the 5-membered heterocyclyl compound may be any growth stage of the plant, and examples thereof include the germination period such as before sowing, at the time of sowing, and after sowing and before and after budding, the period of vegetative growth such as at the time of raising seedling, seedling transplantation, cutting/seedling cutting, and growth after planting, the period of reproductive growth such as before flowering, during flowering, after flowering, and right before ear emergence/ear emergence period, and the harvesting period such as before harvesting, before maturation, and at the start of fruit coloring. In particular, a treatment during a period when the plant is vulnerable to stress, such as the seedling raising period, is preferable.

As the treatment method with the 5-membered heterocyclyl compound, specifically, spraying on the foliage, floral organs or ears of a plant such as foliar spraying; seed treatment such as seed disinfection, seed soaking, and seed coating; seedling treatment, bulb treatment; and treatment of the cultivation area of a plant such as hydroponic treatment and soil irrigation treatment, or the like may be exemplified.

Only a specific part of the plant may be treated, such as the floral organs at the flowering time including before, during, and after flowering, and the ears at the ear emergence time, or the entire plant may be treated.

As the plant for which it is possible to reduce or prevent the effects of abiotic stress by the method of the present invention, the following plants may be exemplified.

As fruit vegetables, cucumber, pumpkin, watermelon, melon, tomato, eggplant, bell pepper, strawberry, okra, green bean, broad bean, pea, edamame, soybean, corn, or the like may be exemplified.

As leafy vegetables, there is napa cabbage, tsukena, bok choy, cabbage, cauliflower, broccoli, Brussels sprouts, onion, leek, garlic, Chinese onion, garlic chive, asparagus, lettuce, saradana lettuce, celery, spinach, chop-suey greens, parsley, Japanese honeywort, water celery, udo, Japanese ginger, butterbur, shiso, or the like.

As root vegetables, there is daikon, turnip, burdock, carrot, potato, taro, sweet potato, Japanese mountain yam, ginger, lotus root, or the like.

Additionally, there is rice, grains, flowers, or the like.

When treating the 5-membered heterocyclyl compound, only the 5-membered heterocyclyl compound may be treated, but it may also be made into a preparation and treated. The dosage form of the preparation is not particularly limited, and dosage forms such as a wettable powder, an emulsion, a powder, granules, an aqueous solvent, a suspension, water dispersible granules, a tablet, or the like may be exemplified. The method for preparing the preparation is not particularly limited, and a publicly known preparation method may be adopted according to the dosage form.

### [Bioassay 1]

The reduction of the abiotic stress, especially drought stress, of a plant by treatment with a 5-membered heterocyclyl compound will be shown with test examples.

### [Test Method]

A 5-membered heterocyclyl compound dissolved in DMF was diluted with water so that the concentration of the compound was 200 ppm, and a sufficient amount of the diluted solution was foliage-sprayed on corn and soybean at the 2 to 3 leaf stage.

Corn and soybean foliage-sprayed with a sufficient amount of a diluted solution prepared by removing the compound were used as the untreated plot.

The sprayed test plants were cultivated for 2 days under the conditions of a temperature of 25°C and a day length of 14 hours.

The aerial parts were cut out and the corn or soybean of the untreated plot was left to stand until completely withered. The degree of withering was investigated from the perspective of four stages (0: healthy to 3: complete withering).

Here, with respect to soybean, complete withering refers to a state in which all the leaves of the soybean are withered and the upper part is curved.

As for corn, it refers to a bent state.

Abscisic acid was used as a control. Abscisic acid (ABA), known as a plant hormone, is produced by the plant itself and is known as an important signal substance that closes the stomata during drought stress to suppress excessive transpiration of water from the leaves, and induces stress tolerance.

### (Corn Test)

The test results using corn are shown in Table 4. By the treatment of ABA, the "withering index" was 1.1. In contrast, the "withering index" was 3.0 in the untreated plot. This shows that stress tolerance is induced and drought stress is reduced.

This shows that the 5-membered heterocyclyl compounds (A) to (E) also reduce drought stress to the same extent as ABA. The 5-membered heterocyclyl compound (F) showed an index higher than that of ABA.

The index of ABA indicates the average of the results of a series of 10 tests. The index of the 5-membered heterocyclyl compounds (A) to (F) indicates the average of the results of a series of 2 tests.

**[Table 4]**

| Compound Number | Withering Index |
|---|---|
| A | 1.5 |
| B | 1.5 |
| C | 1.5 |
| D | 1.5 |
| E | 1.5 |
| F | 0.5 |
| ABA | 1.1 |
| Untreated plot | 3.0 |

The test results are further shown in Table 5.

**[Table 5]**

| Compound Number | Withering Index |
|---|---|
| H | 1.5 |
| K | 1.0 |
| J | 1.0 |
| 6 | 1.0 |
| 8 | 1.5 |
| 9 | 1.5 |
| 10 | 1.0 |
| 11 | 1.0 |
| ABA | 1.1 |
| Untreated plot | 3.0 |

### (Soybean Test)

The test results using soybean are shown in Table 6. By the treatment of ABA, the "withering index" was 0.6. In contrast, the "withering index" was 3.0 in the untreated plot. This shows that stress tolerance is induced and drought stress is reduced.

This shows that the 5-membered heterocyclyl compound (F) reduces the drought stress, although to a lesser extent than ABA.

The index of ABA indicates the average of the results of a series of 10 tests. The index of the 5-membered heterocyclyl compound (F) indicates the average of the results of a series of 2 tests.

**[Table 6]**

| Compound Number | Withering Index |
|---|---|
| F | 1.5 |
| ABA | 0.6 |
| Untreated plot | 3.0 |

The test results are further shown in Table 7.

**[Table 7]**

| Compound Number | Withering Index |
|---|---|
| 4 | 1.5 |
| L | 1.5 |
| ABA | 0.5 |
| Untreated plot | 3.0 |

### [Bioassay 2]

Next, the reduction of the abiotic stress, especially salt stress, of a plant by treatment with a 5-membered heterocyclyl compound will be shown with test examples.

Arabidopsis thaliana seeds were sterilized with 70% ethanol and then sown in a petri dish containing HYPONeX (sterilized) diluted 4,000 times with water.

The compound was diluted with sterile water so that the concentration of the compound dissolved in DMSO was 5 ppm. 65 µl of each drug solution was dispensed into a 96-well microplate, into which 5 Arabidopsis thaliana plants on their 8th day of sowing were placed and left to stand for 1 day. The next day, the plants were transferred to a well containing 65 ul of 150 mM NaCl and cultured for 7 days. The treatment was performed in two series, and in the investigation, a stereomicroscope was used to determine their survival, with the green individuals identified as alive and the yellowed or bleached individuals as dead.

The test results are shown in Table 8 below. The survival rate of the untreated plot was 0%, whereas the compound-treated plot showed a survival rate of 70% to 80%.

**[Table 8]**

| Compound Number | Survival Rate (%) |
|---|---|
| D | 80 |
| G | 80 |
| M | 70 |
| 1 | 80 |
| 2 | 70 |
| 3 | 70 |
| 5 | 80 |
| 7 | 70 |
| Untreated plot | 0 |

## Claims

1. A method for reducing or preventing an influence of an abiotic stress on a plant, comprising treating a plant exposed to the abiotic stress or a non-exposed plant with at least one compound selected from the group consisting of the compounds of the following formula (I) and formula (II): 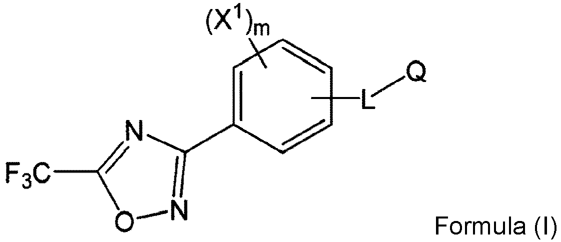 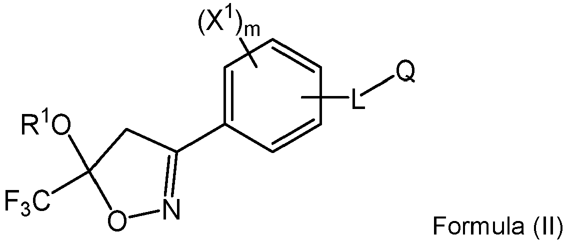 wherein in formula (I) and formula (II),
Q denotes a group of formula (Q-1), formula (Q-2), formula (Q-3), formula (Q-4), formula (Q-5), or formula (Q-6), 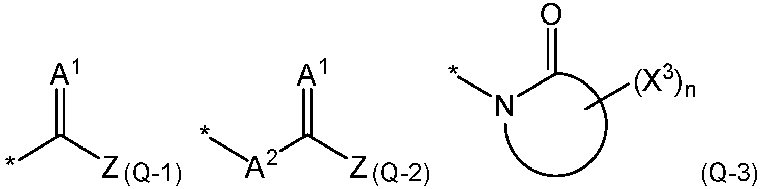 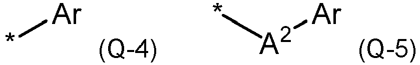 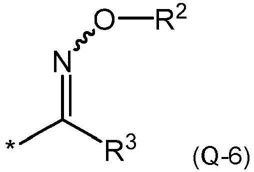
in formula (Q-1), formula (Q-2), formula (Q-3), formula (Q-4), formula (Q-5), and formula (Q-6), * denotes a binding position,
Z denotes a C1-6 alkyl group, a C1-6 alkyl group having one or more X², a C2-6 chain unsaturated hydrocarbon group, a C2-6 chain unsaturated hydrocarbon group having one or more X², a C3-8 cycloalkyl group, a C3-8 cycloalkyl group having one or more X³, a C6-10 aryl group, a C6-10 aryl group having one or more X³, a 5- to 6-membered heterocyclyl group, a 5- to 6-membered heterocyclyl group having one or more X³, a hydroxyl group, a group represented by RO-, a group represented by RS-, an amino group, a group represented by RNH-, or a group represented by R₂N-,
R each independently denotes a C1-6 alkyl group, a C1-6 alkyl group having one or more X², a C2-6 chain unsaturated hydrocarbon group, a C2-6 chain unsaturated hydrocarbon group having one or more X², a C3-8 cycloalkyl group, a C3-8 cycloalkyl group having one or more X³, a C5-9 bicycloalkyl group, a C5-9 bicycloalkyl group having one or more X³, a C6-10 aryl group, a C6-10 aryl group having one or more X³, a 5- to 6-membered heterocyclyl group, or a 5- to 6-membered heterocyclyl group having one or more X³,
in the above group represented by R₂N-, R and R are optionally joined to form a 4- to 6-membered ring together with the nitrogen atom to which they are attached, and the 4- to 6-membered ring optionally has one or more X²,
X² denotes a halogeno group, a C3-8 cycloalkyl group, a C3-8 cycloalkyl group having one or more G², a C6-10 aryl group, a C6-10 aryl group having one or more G², a 5- to 6-membered heterocyclyl group, a 5- to 6-membered heterocyclyl group having one or more G², a group represented by R^{a}O-, a group represented by R^{a}S(O)ₙ₁-, a group represented by R^{a}-CO-, a group represented by R^{a}O-CO-, a group represented by R^{a}NH-, a group represented by R^{a}₂N-, a carbamoyl group, a group represented by R^{a}NH-CO-, a group represented by R^{a}₂N-CO-, an oxo group (O=), an imino group (HN=), a hydroxyimino group (HO-N=), a divalent group represented by R^{a}O-N=, or a cyano group,
X³ denotes a halogeno group, a C1-6 alkyl group, a C1-6 alkyl group having one or more G¹, a C2-6 chain unsaturated hydrocarbon group, a C2-6 chain unsaturated hydrocarbon group having one or more G¹, a C3-8 cycloalkyl group, a C3-8 cycloalkyl group having one or more G², a C6-10 aryl group, a C6-10 aryl group having one or more G², a 5- to 6-membered heterocyclyl group, a 5- to 6-membered heterocyclyl group having one or more G², a hydroxyl group, a group represented by R^{a}O-, a group represented by R^{a}S(O)ₙ₁-, a group represented by R^{a}-CO-, a carboxyl group, a group represented by R^{a}O-CO-, an amino group, a group represented by R^{a}NH-, a group represented by R^{a}₂N-, a carbamoyl group, a group represented by R^{a}NH-CO-, a group represented by R^{a}₂N-CO-, a group represented by HO-N=CH-, or a group represented by R^{a}O-N=CH-,
n1 denotes an integer of 0 to 2,
R^{a} each independently denotes a C1-6 alkyl group, a C1-6 alkyl group having one or more G¹, a C2-6 chain unsaturated hydrocarbon group, a C2-6 chain unsaturated hydrocarbon group having one or more G¹, a C3-8 cycloalkyl group, a C3-8 cycloalkyl group having one or more G², a C6-10 aryl group, a C6-10 aryl group having one or more G², a 5- to 6-membered heterocyclyl group, or a 5- to 6-membered heterocyclyl group having one or more G²,
G¹ each independently denotes a halogeno group, a hydroxyl group, a C1-6 alkoxy group, a C1-6 haloalkoxy group, a C1-6 alkylthio group, a C1-6 alkylsulfinyl group, a C1-6 alkylsulfonyl group, a C3-8 cycloalky group, a C6-10 aryl group, a C6-10 aryl group having one or more g¹, a 5- to 6-membered heterocyclyl group, a 5- to 6-membered heterocyclyl group having one or more g¹, an oxo group (O=), or an N-C1-6 alkoxyimino group, or a cyano group,
G² each independently denotes a halogeno group, a C1-6 alkyl group, a C1-6 haloalkyl group, a hydroxyl group, a C1-6 alkoxy group, a C1-6 alkylthio group, a C1-6 alkylsulfinyl group, a C1-6 alkylsulfonyl group, a C3-8 cycloalky group, a C6-10 aryl group, a C6-10 aryl group having one or more g¹, a 5- to 6-membered heterocyclyl group, a 5- to 6-membered heterocyclyl group having one or more g¹, a nitro group, or a cyano group,
g¹ each independently denotes a halogeno group, a C1-6 alkyl group, a C1-6 haloalkyl group, a C1-6 alkoxy group, a C1-6 haloalkoxy group, a nitro group, or a cyano group,
in the group represented by R^{a}₂N- and the group represented by R^{a}₂N-CO- mentioned above, R^{a} and R^{a} are optionally joined to form a 4- to 6-membered ring together with the nitrogen atom to which they are attached, and the 4- to 6-membered ring optionally has one or more G¹,
in formula (Q-3), the partial structure represented by formula (q-3) denotes a 5- to 6-membered ring composed of the nitrogen atom attached to L in formula (I) and the carbon atom of the carbonyl adjacent thereto, and 3 to 4 ring atoms each independently selected from a carbon atom, a nitrogen atom, an oxygen atom, and a sulfur atom, wherein the bond between the ring atoms is a single bond or double bond, * denotes a binding position, and X³ in formula (Q-3) denotes a substituent on the 5- to 6-membered ring, 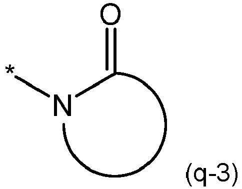
n is a chemically acceptable number of X³ and denotes any integer of 0 to 4 wherein when n is 2 or more, X³ is the same or different from each other, and adjacent X³ and X³ are optionally joined to form a 5- to 6-membered ring together with two carbon atoms to which they are each attached,
X¹ denotes a C1-6 alkyl group, a C1-6 haloalkyl group, a C1-6 alkoxy group, a C1-6 haloalkoxy group, or a halogeno group,
m is a chemically acceptable number of X¹ and denotes any integer of 0 to 4 wherein when m is 2 or more, X¹ is the same or different from each other,
L denotes a single bond, a C1-6 alkylene group, or a C1-6 alkylene group having one or more X⁴,
X⁴ each independently denotes a halogeno group, a C1-6 alkyl group, a hydroxyl group, a C1-6 alkoxy group, a C1-6 haloalkoxy group, a C1-6 alkylthio group, a C1-6 alkylsulfinyl group, a C1-6 alkylsulfonyl group, an oxo group (O=), or an N-C1-6 alkoxyimino group,
wherein when there are two or more X⁴, X⁴ and X⁴ are optionally joined to form a C2-5 alkylene group,
A¹ denotes an oxygen atom or a sulfur atom,
A² denotes an oxygen atom, a group represented by - NH-, a group represented by -NR^{a}-, or a group represented by -N(OR^{a})-,
Ar denotes a C6-10 aryl group, a C6-10 aryl group having one or more X³, a 2-oxo-1,2-dihydropyridyl group, a 2-oxo-1,2-dihydropyridyl group having one or more X³, a 5-to 6-membered heterocyclyl group, or a 5- to 6-membered heterocyclyl group having one or more X³,
R² denotes a hydrogen atom, a C1-6 alkyl group, a C1-6 alkyl group having one or more X², a C2-6 chain unsaturated hydrocarbon group, or a C2-6 chain unsaturated hydrocarbon group having one or more X²,
R³ denotes a hydrogen atom, a C1-6 alkyl group, or a C1-6 alkyl group having one or more X², and
in formula (II), R¹ denotes a hydrogen atom, or a C1-6 alkyl group.

2. The method according to claim 1, wherein formula (Q-1) is formula (Q-1-A): 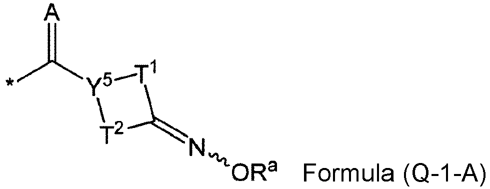 wherein in formula (Q-1-A), * denotes a binding position,
T¹ denotes a C1-6 alkylene group, or a C1-6 alkylene group having one or more X⁵,
T² denotes a C1-6 alkylene group, or a C1-6 alkylene group having one or more X⁵,
X⁵ each independently denotes a halogeno group, a C1-6 alkyl group, a hydroxyl group, a C1-6 alkoxy group, a C1-6 haloalkoxy group, a C1-6 alkylthio group, a C1-6 alkylsulfinyl group, or a C1-6 alkylsulfonyl group,
Y⁵ denotes a nitrogen atom, and
R^{a} has the same meaning as in claim 1.

3. The method according to claim 1, wherein formula (Q-3) is formula (Q-3-A): 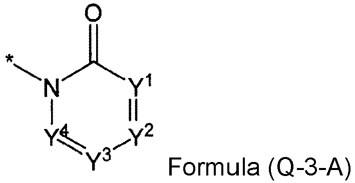 wherein in formula (Q-3-A), * denotes a binding position,
Y¹ denotes a nitrogen atom, CH, or CX³,
Y² denotes a nitrogen atom, CH, or CX³,
Y³ denotes a nitrogen atom, CH, or CX³, and
Y⁴ denotes a nitrogen atom, CH, or CX³,
with the proviso that two or more of Y¹ to Y⁴ are not nitrogen atoms,
X³ being adjacent are optionally joined together to form a 5- to 6-membered ring together with two carbon atoms to which they are each attached, and
X³ has the same meaning as in claim 1.

4. The method according to any one of claims 1 to 3, wherein the abiotic stress is drought stress.

5. The method according to any one of claims 1 to 3, wherein the abiotic stress is salt stress.

6. The method according to any one of claims 1 to 5, wherein the treatment is a spraying treatment, a soil irrigation treatment, a seed treatment or a hydroponic treatment.
